(19)

**Europäisches Patentamt**

**European Patent Office**

**Office européen des brevets**

(11)   **EP 2 093 732 A1**

(12)   **EUROPÄISCHE PATENTANMELDUNG**

(43) Veröffentlichungstag:
    **26.08.2009 Patentblatt 2009/35**

(51) Int Cl.:
    ***G08B 17/103*** (2006.01)      ***G08B 29/04*** (2006.01)

(21) Anmeldenummer: **08101743.6**

(22) Anmeldetag: **19.02.2008**

(84) Benannte Vertragsstaaten:
    **AT BE BG CH CY CZ DE DK EE ES FI FR GB GR
    HR HU IE IS IT LI LT LU LV MC MT NL NO PL PT
    RO SE SI SK TR**
    Benannte Erstreckungsstaaten:
    **AL BA MK RS**

(71) Anmelder: **SIEMENS AKTIENGESELLSCHAFT
    80333 München (DE)**

(72) Erfinder:
    • **Loepfe, Markus, Dr.**
      **8706 Feldmeilen (CH)**
    • **Müller, Kurt, Dr.**
      **8708 Männedorf (CH)**
    • **Tenchio, Georges A., Dr.**
      **8123 Ebmatingen (CH)**
    • **Vollenweider, Walter**
      **6312 Steinhausen (CH)**

(54)   **Vorrichtung und Verfahren zum Detektieren von Rauch durch gemeinsame Auswertung
       zweier optischer Rückstreusignale**

(57)   Ein Rauchmelder (100) weist auf ein Grundelement (105) mit einer planen Montagefläche, einen an der Montagefläche angebrachten ersten Lichtsender (111) zum Aussenden eines ersten Beleuchtungslichts (111a), einen neben dem ersten Lichtsender (111) angebrachten ersten Lichtempfänger (112) zum Empfangen eines ersten Messlichts (112a), welches aus einer Rückstreuung des ersten Beleuchtungslichts (111a) an einem in einem ersten Detektionsraum (115) befindlichen Messobjekt resultiert. Der Rauchmelder (100) weist ferner auf einen an der Montagefläche angebrachten zweiten Lichtsender (121) zum Aussenden eines zweiten Beleuchtungslichts (121a), einen neben dem zweiten Lichtsender (121) angebrachten zweiten Lichtempfänger (122) zum Empfangen eines zweiten Messlichts (122a), welches aus einer Rückstreuung des zweiten Beleuchtungslichts (121a) an einem in einem zweiten Detektionsraum (125) befindlichen Messobjekt resultiert, und eine Datenverarbeitungseinrichtung (135), welche zum gemeinsamen Auswerten eines ersten Ausgangssignals (212b) des ersten Lichtempfängers (112, 212) und eines zweiten Ausgangssignals (222b) eines zweiten Lichtempfängers (122, 222). Außerdem wird ein Verfahren zum Detektieren von Rauch unter Verwendung des beschriebenen Rauchmelders (100) angegeben.

FIG 1

100

111  110  112 136  135      130 121  120  122  105

140

111a      112a          121a      122a

115                 125

EP 2 093 732 A1

**Beschreibung**

Die vorliegende Erfindung betrifft das technische Gebiet der Gefahrmeldetechnik. Die vorliegende Erfindung betrifft insbesondere eine auf dem Prinzip optischer Streulichtmessungen beruhende Vorrichtung zum Detektieren von Rauch. Die vorliegende Erfindung betrifft ferner ein auf dem Prinzip optischer Streulichtmessungen beruhendes Verfahren zum Detektieren von Rauch.

Optische bzw. photoelektrische Rauchmelder arbeiten üblicherweise nach dem Streulichtverfahren. Dabei wird ausgenutzt, dass klare Luft praktisch kein Licht reflektiert. Befinden sich aber Rauchpartikel in der Luft, so wird ein von einer Infrarot-Leuchtdiode ausgesandtes Beleuchtungslicht zumindest teilweise an den Rauchpartikeln gestreut. Ein Teil dieses Streulichtes fällt dann auf einen lichtempfindlichen Sensor, der nicht direkt vom Lichtstrahl beleuchtet wird. Ohne Rauchpartikel in der Luft kann das Beleuchtungslicht den lichtempfindlichen Sensor nicht erreichen.

Aus der EP 1 039 426 A2 ist ein Rauchmelder bekannt, welcher ein Gehäuse und innerhalb des Gehäuses angeordnet einen Lichtsender und einen Lichtempfänger aufweist. Ein durch die räumliche Anordnung von Lichtsender und Lichtempfänger definierter Rauch-Detektionsbereich befindet sich außerhalb des Rauchmelders. Um eine schleichende Verschmutzung des Rauchmelders erkennen zu können, ist dem Lichtsender ein Kontrollempfänger zugeordnet, welcher zur Erfassung der vom Lichtsender ausgehenden Strahlung eingerichtet ist. Ferner ist ein dem Lichtempfänger zugeordneter Kontrollsender vorgesehen, so dass die Empfindlichkeit des Lichtempfängers überprüft werden kann.

Aus der DE 10 2004 001 699 A1 ist ein Brandmelder bekannt, welcher auf dem bekannten Streustrahlungsprinzip beruht. Der Brandmelder weist mehrere Strahlungssender und mehrer Strahlungsempfänger auf, deren Strahlungsgänge mehrere beabstandete Streuvolumina bzw. Detektionsräume definieren. Die Detektionsräume sind örtlich derart voneinander beabstandet, dass sich kleine Messobjekte wie beispielsweise Insekten nicht gleichzeitig durch mehrere Detektionsräume bewegen können. Auf diese Weise kann zuverlässig zwischen einem an einem kleinen Messobjekt gestreuten Licht und einem Brandfall unterschieden werden, bei dem Rauch über sämtliche Detektionsräume verteilten Rauch unterschieden werden.

Aus der WO 2005/051053 ist ein Brandmelder bekannt, welcher in Unterputz an einer Decke eines zu überwachenden Raumes angebracht werden kann. Der Brandmelder weist einen Strahlungssender und einen Strahlungsempfänger auf, die nebeneinander an einem Meldereinsatz angebracht sind. Zwischen einer Abdeckkappe, welche den Brandmelder von dem zu überwachenden Raum abtrennt, und dem Meldereinsatz kann eine Folie eingefügt werden, deren Farbe an die Deckenfarbe des zu überwachenden Raumes angepasst werden kann. Durch eine geeignete Farbauswahl kann der Brandmelder an die Raumgestaltung des zu überwachenden Raumes angepasst werden, so dass der Brandmelder von in dem Raum befindlichen Personen nicht oder kaum wahrgenommen wird.

Aus der EP 0 472 039 A2 ist ein Feuermelder und ein Verfahren zum Detektieren von Feuer bekannt. Der Feuermelder weist eine Laserlichtquelle auf, welche eingerichtet ist kurze Laserpulse in einen Überwachungsbereich auszusenden. Der Feuermelder weist ferner einen Lichtdetektor auf, welcher neben der Laserlichtquelle angeordnet ist und welcher eingerichtet ist, von im Überwachungsbereich befindlichen Rauch oder anderen Objekten um 180° zurück gestreutes Laserlicht zu detektieren. Anhand der Zeitdifferenz zwischen ausgesandten und empfangenen Laserpulsen kann die Position eines Rückstreuobjekts innerhalb des Überwachungsbereichs bestimmt werden. Durch einen geeigneten Vergleich mit durch Referenzmessungen gewonnenen Zeitdifferenzen kann ferner die Art von detektiertem Rauch erkannt werden. Insbesondere kann zwischen schwarzem und weißem Rauch unterschieden werden.

Der vorliegenden Erfindung liegt die Aufgabe zugrunde, bei einem geringen apparativen Aufwand die Detektion von Rauch insbesondere im Hinblick auf die Wahrscheinlichkeit für falsche Alarme zu verbessern.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird eine Vorrichtung zum Detektieren von Rauch beschrieben. Die beschriebene Vorrichtung weist auf (a) ein Grundelement mit einer planen Montagefläche, (b) einen ersten Lichtsender, welcher an der Montagefläche angebracht ist und welcher zum Aussenden eines ersten Beleuchtungslichts eingerichtet ist, und (c) einen ersten Lichtempfänger, welcher neben dem ersten Lichtsender an der Montagefläche angebracht ist und welcher zum Empfangen eines ersten Messlichts eingerichtet ist, welches aus einer Rückstreuung des ersten Beleuchtungslichts an einem in einem ersten Detektionsraum befindlichen Messobjekt resultiert. Die beschriebene Vorrichtung weist ferner auf (d) einen zweiten Lichtsender, welcher an der Montagefläche angebracht ist und welcher zum Aussenden eines zweiten Beleuchtungslichts eingerichtet ist, (e) einen zweiten Lichtempfänger, welcher neben dem zweiten Lichtsender an der Montagefläche angebracht ist und welcher zum Empfangen eines zweiten Messlichts eingerichtet ist, welches aus einer Rückstreuung des zweiten Beleuchtungslichts an einem in einem zweiten Detektionsraum befindlichen Messobjekt resultiert, und (f) eine Datenverarbeitungseinrichtung, welche mit dem ersten Lichtempfänger und dem zweiten Lichtempfänger gekoppelt ist und welche zum gemeinsamen Auswerten eines ersten Ausgangssignals des ersten Lichtempfängers und eines zweiten Ausgangssignals eines zweiten Lichtempfängers eingerichtet ist.

Der beschriebenen Vorrichtung zum Detektieren von Rauch, welche Vorrichtung nachfolgend auch kurz Rauchmelder genannt wird, liegt die Erkenntnis zugrunde, dass der Rauchmelder durch eine plane Anordnung sämtlicher optoelektronischen Komponenten an einer gemeinsamen Montagefläche in einer besonders flachen Bauform realisiert werden kann. Dabei befindet sich der erste Detektionsraum und der zweite Detektionsraum außerhalb des eigentlichen Rauchmelders. Somit handelt es sich bei dem beschriebenen Rauchmelder um einen offenen Rauchmelder.

Es wird darauf hingewiesen, dass in der Praxis bevorzugt Rauch, der sich in unmittelbarer Nähe zum Rauchmelder befindet, in signifikanter Weise zu dem empfangenen Messlicht beiträgt. Rauch der weiter als ungefähr 10mm von dem Rauchmelder entfernt ist, wird von diesem üblicherweise nicht mehr registriert, da das entsprechende optische Rückstreusignal zu klein ist.

Vor diesem Hintergrund werden in dieser Anmeldung die beiden Begriffe "Detektionsraum" und "Blickfeld des Rauchmelders" voneinander unterschieden.

Unter dem Begriff "Detektionsraum" wird dabei eine Schicht verstanden, die unmittelbar an den Rauchmelder angrenzt. Rauch, welcher sich innerhalb des Detektionsraumes befindet, wird dann zu einem signifikanten und messbaren optischen Rückstreusignal führen. Rauch, welcher sich außerhalb des Detektionsraumes befindet und welcher demzufolge von dem Rauchmelder weiter beabstandet ist, wird nicht in nennenswerter Weise zu dem empfangenem Rückstreusignal beitragen.

Unter dem Begriff "Blickfeld des Rauchmelders" wird der Bereich verstanden, der von dem Rauchmelder grundsätzlich erfasst wird und der außerhalb des Detektionsraumes liegt. Wie oben bereits erläutert, kann Rauch, der sich in dem Blickfeld des Rauchmelders befindet, nicht in signifikanter Weise zu dem optischen Rückstreusignal beitragen. Dies gilt jedoch nicht für gegenständliche Streuobjekte wie beispielsweise Insekten oder Möbelstücke. Diese können auch dann, wenn sie sich lediglich im Blickfeld des Rauchmelders befinden, zu einem nennenswerten optischen Rückstreusignal führen.

Durch die flache Bauform ist es möglich, den beschriebenen Rauchmelder ohne großen Aufwand in die Wände und insbesondere in die Decken von zu überwachenden Räumen zu integrieren. Auch im Falle einer Aufputzmontage lässt sich der beschriebenen Rauchmelder leicht an Wände und/oder Decken anbringen. Dabei nimmt der Rauchmelder lediglich einen geringen Platzbedarf ein. Außerdem kann der beschriebene Rauchmelder dezent angebracht werden, so dass er von Personen, die sich in dem von dem Rauchmelder überwachten Raum befinden, nicht oder zumindest nicht für die Raumgestaltung störend wahrgenommen wird.

Das Messobjekt ist insbesondere Rauch, welcher einzelne Rauchpartikel aufweist, die von dem beschriebenen auf dem Streulichtprinzip beruhenden Rauchmelder detektiert werden. Das Messobjekt kann jedoch in der Praxis auch ein anderes Objekt wie beispielsweise ein Insekt oder ein versehentlich in den Detektionsraum eingebrachter Gegenstand sein, welche ebenfalls ein Rückstreusignal erzeugen. Die optischen Rückstreusignale von in dem Detektionsraum befindlichen gegenständlichen Objekten wie insbesondere Insekten sind jedoch im Vergleich zu den durch Rauch verursachten optischen Rückstreusignalen erheblich stärker. Durch eine geeignete Bewertung der Ausgangssignale des ersten und des zweiten Lichtdetektors durch die Datenverarbeitungseinrichtung können solche Ereignisse jedoch zuverlässig von dem tatsächlichen Vorhandensein von Rauch unterschieden werden.

Infolge der verwendeten Rückstreugeometrie sind auf vorteilhafte Weise Optiken für die Lichtsender und/oder die Lichtempfänger nicht erforderlich. Dadurch kann der beschriebene Rauchmelder besonders kostengünstig hergestellt werden und eignet sich als preiswertes Massenprodukt auch für die Überwachung von Privaträumen.

Die Messung des Streulichts erfolgt bei dem beschrieben Rauchmelder in Rückstreugeometrie von annähernd 180°. Die Abweichung des Streuwinkels von einer exakten Rückstreuung und damit von exakt 180° ergibt sich (a) aus der Beabstandung zwischen dem ersten bzw. zweiten Lichtsender und dem ersten bzw. zweiten Lichtempfänger und (b) aus dem Abstand des Ortes der Rückstreuung von dem jeweiligen Lichtsender bzw. Lichtempfänger. Für eine Streuung an einem sich in dem Detektionsraum befindlichen Streuobjekt kann sich infolge einer geringen Schichtdicke des Detektionsraum eine deutliche Abweichung des Streuwinkels von 180° ergeben.

Der beschriebene Rauchmelder unterscheidet sich insbesondere durch die verwendete Rückstreugeometrie von herkömmlichen Rauchmeldern, welche entweder als Vorwärtsstreuer einen Streuwinkel von ungefähr 60° oder als Rückwärtsstreuer einen Streuwinkel von ungefähr 120° zwischen Beleuchtungslicht und Streulicht aufweisen.

Die opto- bzw. photoelektronischen Komponenten des Rauchmelders können auf vorteilhafte Weise in Surface Mount Technology aufgebrachte Halbleiterdioden sein. In diesem Fall kann das Grundelement eine Leiterplatte sein oder zumindest eine Leiterplatte aufweisen, an welcher die Halbleitersende- und Halbleiterempfangsdioden in bekannter Weise angebracht und elektrisch kontaktiert sind.

Es wird darauf hingewiesen, dass im Rahmen dieser Anmeldung der Begriff Licht grundsätzlich elektromagnetische Wellen in beliebigen Spektralbereichen umfasst. Dazu zählen beispielsweise der ultraviolette, der sichtbare und der infrarote Spektralbereich. Auch länger wellige Strahlung wie beispielweise Mikrowellen stellen Licht im Sinne der vorliegenden Anmeldung dar. Insbesondere ist mit dem Begriff Licht elektromagnetische Strahlung im nahen infraroten Spektralbereich gemeint, in dem als Lichtsender verwendete Leuchtdioden eine besonders hohe Lichtstärke aufweisen. Der beschriebene Rauchmelder kann jedoch nicht nur mit nahezu monochromatischer Lichtstrahlung sondern auch mit Lichtstrahlung betrieben werden, welche zwei oder mehrere diskrete Wellenlängen und/oder ein Wellenlängenkontinuum umfasst.

Gemäß einem weiteren Ausführungsbeispiel der Erfindung sind der erste Lichtsender und der erste Lichtempfänger durch eine erste Reflektionslichtschranke und/oder der zweite Lichtsender und der zweite Lichtempfänger durch eine zweite Reflektionslichtschranke realisiert. Dies hat den Vorteil, dass handelsübliche Reflektionslichtschranken verwendet werden können. Eine relative Justierung zwischen einem Lichtsender und dem entsprechenden Lichtempfänger zur Anpassung der Abstrahlrichtung des Lichtsenders an die Empfangsrichtung des Lichtempfängers ist infolge der festen relativen Anordnung dieser optoelektronischen Komponenten innerhalb eines gemeinsamen Bauelements oder zumindest innerhalb eines gemeinsamen Gehäuses nicht erforderlich. Der Rauchmelder kann deshalb auf vorteilhafte Weise mit einem geringen Montageaufwand aufgebaut werden.

Gemäß einem weiteren Ausführungsbeispiel der Erfindung ist die Richtung des ersten Beleuchtungslichts in Bezug zu einer Normalen der Montagefläche in Richtung des ersten Lichtempfängers geneigt und/oder die Richtung des zweiten Beleuchtungslichts ist in Bezug zu der Normalen der Montagefläche in Richtung des zweiten Lichtempfängers geneigt. Unter dem Begriff Richtung ist in diesem Zusammenhang die mittlere Abstrahlrichtung des ersten und/oder des zweiten Lichtsenders gemeint. Dies bedeutet, dass die Lichtsender nicht nur Laser wie beispielsweise ein VCSEL (Vertical Cavity Surface Emitting Laser) sein können, welche ein nahezu paralleles Lichtbündel aussenden. Die Lichtsender können auch eine Abstrahlcharakteristik mit divergierenden Lichtstrahlen aufweisen, welche um die entsprechende zu dem jeweiligen Lichtempfänger hin geneigte mittlere Abstrahlrichtung eine gewisse Winkelverteilung aufweisen.

Gemäß einem weiteren Ausführungsbeispiel der Erfindung verlaufen die Richtung des ersten Beleuchtungslichts und die Richtung des zweiten Beleuchtungslichts parallel zueinander.

Dabei können sich zwei räumlich voneinander getrennte Detektionsräume ergeben, deren Beabstandung von dem Abstand zwischen den beiden Lichtsender auf der Montagefläche des Grundelements abhängt.

Im Falle von divergierenden bzw. aufgeweiteten Lichtstrahlen für das erste und/oder für das zweite Beleuchtungslicht bezieht sich die Richtung des Beleuchtungslichts jeweils auf die mittlere Abstrahlrichtung.

Gemäß einem weiteren Ausführungsbeispiel der Erfindung stellen der erste Lichtsender und der zweite Lichtsender sowie der erste Lichtempfänger und der zweite Lichtempfänger jeweils eine äußere Begrenzung der Vorrichtung zum Detektieren von Rauch dar. Dies bedeutet, dass sich weder die Lichtsender noch die Lichtempfänger innerhalb eines Gehäuses des beschriebenen Rauchmelders befinden. Außerhalb der photoelektrischen Komponenten Lichtsender und Lichtempfänger befinden sich somit keine anderen Teile des beschriebenen Rauchmelders. Dies gilt auch für Abdeckungen oder Gehäuseteile. Damit kann der Rauchmelder derart ausgebildet sein, dass sich zwischen den photoelektrischen Komponenten und dem jeweiligen Detektionsraum keine weitere ggf. optisch transparente Abdeckung befindet, durch welche die photoelektrischen Komponenten vor Verschmutzung geschützt sind. Derartige Abdeckungen oder Schmutzschilder sind bei vielen Anwendungen insbesondere im Heimbereich jedoch auch gar nicht erforderlich.

Ferner können sich auch der erste Detektionsraum und/oder der zweite Detektionsraum außerhalb des Rauchmelders befinden. In diesem Fall stellt die Vorrichtung zum Detektieren von Rauch einen offenen Rauchmelder dar, welcher keine eigene optische Kammer aufweist.

Gemäß einem weiteren Ausführungsbeispiel der Erfindung weist der Rauchmelder zusätzlich eine Subtraktionseinheit auf, welche eingangsseitig mit dem ersten Lichtempfänger und dem zweiten Lichtempfänger und welche ausgangsseitig mit der Datenverarbeitungseinrichtung gekoppelt ist.

Die Subtraktionseinheit kann beispielsweise mittels geeigneter Hardware-Komponenten realisiert sein, welche basierend auf analogen Ausgangssignalen der beiden Lichtempfänger ein Differenzsignal zwischen dem ersten Ausgangssignal und dem zweiten Ausgangssignal ermitteln. Dieses Differenzsignal kann dann in geeigneter Weise durch einen Prozessor der Datenverarbeitungseinrichtung ausgewertet werden.

Die Subtraktionseinheit kann ebenso in der Datenverarbeitungseinrichtung integriert sein und dort entweder mittels Hardware, mittels Software oder mittels meiner Kombination von Hardware und Software realisiert sein.

Durch die Auswertung des beschriebenen Differenzsignals kann beispielsweise der Einfluss von Fremdlichtquellen eliminiert werden, welche von außen Licht in die beiden Lichtempfänger einstrahlen und somit bei jedem einzelnen Lichtempfänger für ein fälschlicherweise erhöhtes Empfangssignal sorgen.

Gemäß einem weiteren Ausführungsbeispiel der Erfindung ist der erste Lichtempfänger eingerichtet zum Erfassen eines zeitlichen Verlaufs des ersten Messlichts.

Durch eine Erfassung der von dem ersten Lichtempfänger erfassten Rückstreu-Lichtintensität als Funktion der Zeit können auf einfache Weise Informationen über ein in den ersten Detektionsraum eindringendes Streuobjekt gewonnen werden. Handelt es sich nämlich bei dem eindringenden Streuobjekt um Rauch, so wird die zeitliche Änderung der Rückstreuintensität vergleichsweise langsam erfolgen, da Rauch üblicherweise kontinuierlich in den Detektionsraum eindringt. Im Gegensatz dazu wird es bei einem gegenständlichen Messobjekt wie beispielsweise ein Insekt oder ein von einer Person versehentlich in das Blickfeld des beschriebenen Rauchmelders eingebrachter Gegenstand zu einer im Wesentlichen abrupten Änderung der Rückstreuintensität kommen. Somit können anhand der Stärke der zeitlichen Änderung der von dem ersten Lichtempfänger erfassten Rückstreuintensität zuverlässige Informationen über die Art des Streuobjekts gewonnen werden.

Gemäß einem weiteren Ausführungsbeispiel der Erfindung ist der erste Lichtsender eingerichtet zum Aussenden eines gepulsten ersten Beleuchtungslichts.

Die Verwendung von gepulstem Beleuchtungslicht mit sehr kurzen Lichtpulsen mit einer zeitlichen Länge von bevorzugt weniger als 1 ns in Verbindung mit einem Lichtempfänger, welche eine zeitliche Auflösung aufweist, die ebenfalls im Nanosekundenbereich liegt, hat den Vorteil, dass Informationen über die räumliche Verteilung der Lichtstreuer gewonnen werden können. Dabei kann beispielsweise ein erstes optisches Reflexionssignal, welches von dem Boden eines an der Decke eines Raumes angeordneten Rauchmelders herrührt, von einem zweiten Reflexionssignal, welches von einer Streuung an Rauch herrührt, zeitlich diskriminiert werden. Dabei wird die Tatsache ausgenutzt, dass Rauch lediglich dann ein nennenswertes Reflexionssignal liefert, wenn er sich innerhalb eines nahe an dem Rauchmelder befindlichen Detektionsraumes befindet. Dann kann ein dem Rauch zugeordnetes Rückstreulicht eine verschwindende Lichtlaufzeit zugeordnet werden. Im Gegensatz dazu wird für das Rückstreulicht, welches von dem Boden des überwachten Raumes herrührt, eine durch den Abstand zwischen dem Rauchmelder und dem Boden bestimmte endliche Lichtlaufzeit gemessen. Dabei wird ausgenutzt dass der durch die Lichtgeschwindigkeit vorgegebene Lichtweg, den ein Lichtpuls innerhalb einer Nanosekunde zurücklegt, 30 cm lang ist.

In diesem Zusammenhang wird darauf hingewiesen, dass der Detektionsraum eine Schicht sein kann, die sich unmittelbar unterhalb des typischerweise an der Decke eines Raumes angeordneten Rauchmelders befindet. Die Schichtdicke des Detektionsraumes kann beispielsweise ungefähr 10 mm betragen.

An Rauch gestreutes Licht weist demzufolge einen Signalweg von ungefähr 5 bis 20 mm auf. Daraus ergibt sich eine Signalverzögerung von 17 bis 67 Picosekunden. Mit anderen Worten, das Rauchsignal hat lediglich eine verschwindende und nicht messbare Zeitverzögerung und ebenso eine mit vernünftigem Aufwand nicht messbare Signalverbreiterung. Allerdings können weiter entfernte störende gegenständliche Streuobjekte über die Lichtlaufzeit bei einer ausreichenden Zeitauflösung des entsprechenden Lichtempfängers von einer Rückstreuung an nahe des Rauchmelders befindlichem Rauch unterschieden werden. Als Beispiel ergibt ein 15 cm vom Melder entfernter Gegenstand abgesehen von einem sehr starken Signal auch eine messbare Signalverzögerung von einer Nanosekunde. Zusätzlich kann sich evtl. auch eine Pulsverbreiterung ergeben, wenn nämlich der Gegenstand mehrere Rückstreubereiche aufweist, die unterschiedlich weit von dem Rauchmelder beabstandet sind.

So kann beispielsweise auch aus einer Pulsdauer des empfangenen Messlichts, welche länger ist als die Pulsdauer des entsprechenden Beleuchtungslichts, geschlossen werden, dass das Beleuchtungslicht an verschiedenen Gegenständen zurückgestreut sind, welche unterschiedlich weit von dem ersten Lichtsender bzw. dem ersten Lichtempfänger beabstandet sind. Eine derartige durch unterschiedliche Gegenstände verursachte zeitliche Verbreiterung oder Strukturierung des Messlichtpulses ist demzufolge ein zuverlässiges Zeichen, dass es sich bei dem im Detektionsraum befindlichen Streuobjekt nicht um Rauch, sondern um Reflexe am Boden oder an anderen nahen Gegenständen, handelt.

Im Gegensatz dazu führt Rauch zu einer nicht messbaren Pulsverbreiterung. Dies gilt jedenfalls dann, wenn für den Rauchmelder lediglich preiswerte Komponenten und keine optischen Hochleistungsmessinstrumente zur Messung von Verzögerungszeiten im Bereich von Pico- oder Femtosekunden verwendet werden. Damit können anhand der Pulslänge und Pulsstruktur des empfangenen Messlichtsignals körperliche Gegenstände wie beispielsweise Insekten oder versehentlich in das Blickfeld des Melders eingebrachte Gegenstände zuverlässig von einem in dem Detektionsraum befindlichen Rauch unterschieden werden.

Außerdem kann durch eine Messung der Zeitdifferenz t zwischen dem Aussenden eines Beleuchtungslichtpulses und dem zurück gestreuten und von dem Lichtempfänger detektierten Messlichtpuls bestimmt werden, wie weit der jeweilige Gegenstand von dem Lichtsender bzw. dem Lichtempfänger entfernt ist. Die Entfernung s zwischen dem Gegenstand und dem Lichtsender bzw. dem Lichtempfänger ergibt sich dabei durch folgende Gleichung:

$$s = c \cdot t/2$$

Dabei steht c für die Lichtgeschwindigkeit.

Es wird darauf hingewiesen, dass selbstverständlich auch der zweite Lichtsender zum Aussenden von gepulstem Beleuchtungslicht eingerichtet sein kann. Ebenso kann der zweite Lichtempfänger zum Erfassen eines zeitlichen Verlaufs des zweiten Messlichts eingerichtet sein.

Gemäß einem weiteren Ausführungsbeispiel der Erfindung weist die Vorrichtung zum Detektieren von Rauch zusätzlich eine Steuereinrichtung auf, welche mit dem ersten Lichtsender und dem zweiten Lichtsender gekoppelt ist und welche derart eingerichtet ist, dass der erste Lichtsender unabhängig von dem zweiten Lichtsender aktivierbar ist.

Durch eine unabhängige Ansteuerung der beiden Lichtquellen kann der beschriebene Rauchmelder in verschiedenen Betriebsarten betrieben werden. So ist beispielsweise ein asymmetrischer Betriebsmodus möglich, bei dem sowohl der erste Lichtempfänger als auch der zweite Lichtempfänger aktiv ist, wohingegen von den beiden Lichtsendern lediglich einer eingeschaltet und der andere gezielt ausgeschaltet ist. Wenn in diesem Betriebsmodus beide Lichtempfänger zumindest annähernd das gleiche Signal zeigen, dann handelt es sich um ein fernes Echo. Dieses kann durch eine Reflexion des von dem aktiven Lichtsender ausgesendeten Beleuchtungslichts an einem weit entfernten Gegenstand wie beispielsweise dem Fußboden eines überwachten Raumes stammen. In einem Gefahrenfall, bei dem Rauch in den überwachten Raum eindringt oder entsteht, wird der Rauch auch in die nahe Umgebung des Rauchmelders eindringen, so dass die beiden Lichtempfänger ein stark unterschiedliches Messsignal empfangen. Dabei wird der Lichtempfänger, welcher dem eingeschalteten Lichtsender zugeordnet ist, ein deutlich intensitätsstärkeres Messlicht empfangen als der andere Lichtempfänger.

Gemäß einem weiteren Aspekt der Erfindung wird ein Verfahren zum Detektieren von Rauch unter Verwendung der oben beschriebenen Vorrichtung beschrieben. Das beschriebe Rauchdetektionsverfahren weist auf (a) ein Aussenden zumindest des ersten Beleuchtungslichts durch den ersten Lichtsender und (b) ein Empfangen zumindest des ersten Messlichts mittels des ersten Lichtempfängers, welches aus einer Rückstreuung des ersten Beleuchtungslichts an einem in einem ersten Detektionsraum befindlichen Messobjekt resultiert.

Dem beschriebenen Verfahren liegt die Erkenntnis zugrunde, dass auch in Rückwärtsstreugeometrie empfangenes Messlicht genügend starke Signale erzeugen kann, die für eine zuverlässige Detektion von Rauch ausgewertet werden können. Durch diese von den Erfindern mittels experimentellen Versuchen verifizierte Erkenntnis ist es nun möglich, Rauchmelder innerhalb einer besonders kompakten Bauform zu realisieren. Dabei können die photoelektrischen Komponenten auf einer gemeinsamen Leiterplatte angeordnet werden.

Gemäß einem Ausführungsbeispiel der Erfindung weist das Verfahren zusätzlich auf ein Empfangen von Licht mittels des zweiten Lichtempfängers.

Bei einer Aktivierung von lediglich einem der beiden Lichtsender des oben beschriebenen Rauchmelders kann durch eine gemeinsame Auswertung der von beiden Lichtempfängern gemessenen Lichtintensitäten eine zuverlässige Detektion von Rauch stattfinden. Wie oben bereits dargelegt, wird nämlich durch eine Rückstreuung an räumlich verteilten Rauchpartikeln die von dem ersten Lichtempfänger empfangene Lichtintensität deutlich größer sein als die Lichtintensität, welche auf den zweiten Lichtempfänger trifft, der dem nicht aktivierten Lichtsender zugeordnet ist. Erst bei einer Lichtstreuung an einem sehr weit entfernten Gegenstand werden die beiden Lichtintensitäten, die jeweils auf einen der beiden Lichtempfänger treffen, zumindest annähernd gleich sein.

Gemäß einem weiteren Ausführungsbeispiel der Erfindung weist das Verfahren zusätzlich auf ein Bilden eines Differenzsignals zwischen dem ersten Ausgangssignal und dem zweiten Ausgangssignal. Das Differenzsignal kann durch einen Prozessor der Datenverarbeitungseinrichtung ausgewertet und dabei der störende Einfluss von Fremdlichtquellen eliminiert werden.

Gemäß einem weiteren Ausführungsbeispiel der Erfindung weist das erste Beleuchtungslicht Lichtpulse auf. Durch die Einführung einer Zeitabhängigkeit bei der Beleuchtung durch den ersten Lichtsender können zusätzliche Informationen über die räumliche Lage von Streuobjekten erhalten werden, die sich in dem ersten Detektionsraum oder in einem dem ersten Lichtsender und dem ersten Lichtempfänger zugeordneten Blickfeld des Rauchmelders befinden.

Selbstverständlich kann auch das von dem zweiten Lichtsender ausgesandte zweite Beleuchtungslicht Lichtpulse aufweisen.

Gemäß einem weiteren Ausführungsbeispiel der Erfindung weist das Verfahren zusätzlich auf ein Messen der Länge der als erstes Messlicht zurück gestreuten Lichtpulse. Dies hat den Vorteil, dass Informationen über die räumliche Anordnung von verschiedenen Gegenständen innerhalb des Blickfelds des Rauchmelders gewonnen werden können.

So führt eine große räumliche Verteilung der Streuobjekte je nach Pulslänge zu einer zeitlichen Verbreiterung oder einer Strukturierung der zurück gestreuten Messlichtpulse im Vergleich zu den ausgesandten Beleuchtungslichtpulsen. Dies liegt daran, dass das Beleuchtungslicht an verschiedenen Gegenständen zurückgestreut wird, welche unterschiedlich weit von dem ersten Lichtsender bzw. von dem ersten Lichtempfänger beabstandet ist. Bei Berücksichtigung der endlichen Lichtgeschwindigkeit führen unterschiedliche optische Weglängen zu einer zeitlichen Verbreiterung oder Strukturierung der empfangenen Beleuchtungslichtpulse. Im Gegensatz dazu wird eine Rückstreuung an Rauch zu keiner deutlichen Verlängerung des Messlichtpulses gegenüber dem Beleuchtungslichtpuls führen. Wie oben bereits erläutert liegt dies daran, dass lediglich Rauch, welches sich in dem Detektionsraum in unmittelbarer Nähe des Rauchmelders befindet, ein nennenswertes Rückstreusignal liefert. Rauch, welcher sich lediglich im Blickfeld des Rauchmelders befindet, liefert üblicherweise ein nicht messbares optisches Rückstreusignal. Damit können anhand der Pulslänge und der Pulsstruktur des empfangenen Messlichtsignals körperliche Gegenstände wie beispielsweise Insekten oder versehentlich in das Blickfeld des Melders eingebrachte Gegenstände zuverlässig von in den Detektionsraum eindringendem Rauch unterschieden werden.

Es wird darauf hingewiesen, dass selbstverständlich auch die zeitlichen Längen von als zweites Messlicht zurück gestreuten Lichtpulsen gemessen und entsprechend ausgewertete werden können.

Gemäß einem weiteren Ausführungsbeispiel der Erfindung weist das Verfahren zusätzlich auf ein Messen der Zeitdifferenz zwischen dem Aussenden eines Lichtpulses des ersten Beleuchtungslichts und dem Empfangen des entsprechenden Lichtpulses des zurück gestreuten ersten Messlichts. Dies hat den Vorteil, dass der Abstand eines Streuobjekts von dem ersten Lichtsender bzw. dem ersten Lichtempfänger absolut bestimmt werden kann.

Selbstverständlich kann auch die Zeitdifferenz zwischen dem Aussenden eines Lichtpulses des zweiten Beleuchtungslichts und dem Empfangen des entsprechenden Lichtpulses des zurück gestreuten zweiten Messlichts gemessen werden.

Weitere Vorteile und Merkmale der vorliegenden Erfindung ergeben sich aus der folgenden beispielhaften Beschreibung derzeit bevorzugter Ausführungsformen.

Figur 1    zeigt in einer schematischen Querschnittsdarstellung einen Rauchmelder mit zwei Reflexionslichtschranken, die an einer gemeinsamen Leiterplatte angebracht sind.

Figur 2    zeigt eine Subtraktionseinheit zur Bildung eines Differenzsignals zwischen zwei Ausgangssignalen von den in Figur 1 dargestellten Lichtschranken.

Figur 3    illustriert eine zeitliche Verbreiterung oder Strukturierung eines Lichtpulses infolge der Streuung an zwei Gegenständen, die unterschiedlich weit von dem Rauchmelder beabstandet sind.

An dieser Stelle bleibt anzumerken, dass sich in der Zeichnung die Bezugszeichen von gleichen oder von einander entsprechenden Komponenten lediglich in ihrer ersten Ziffer und/oder durch einen angehängten Buchstaben unterscheiden.

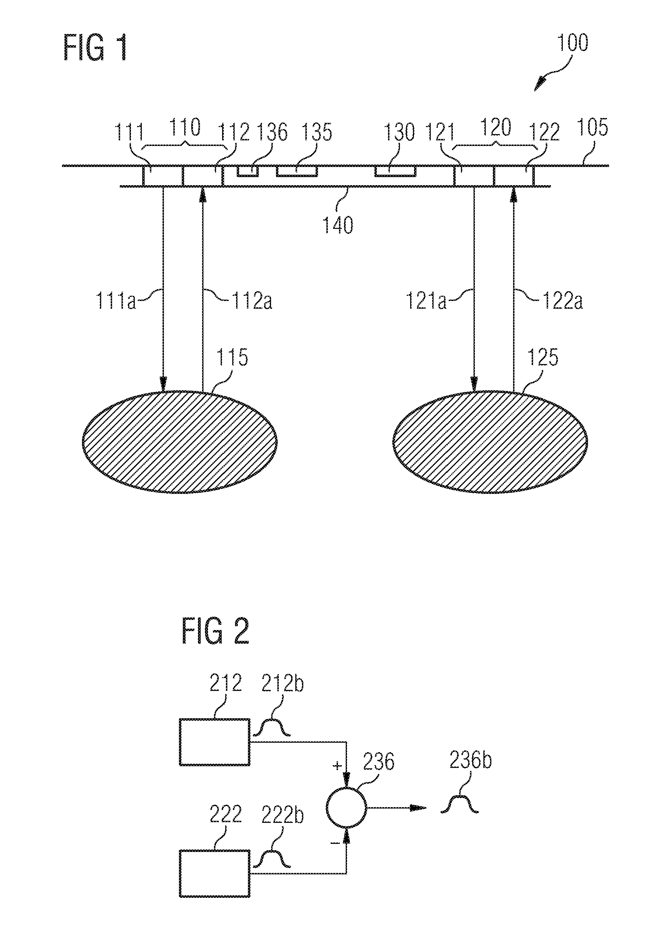

Figur 1 zeigt einen Rauchmelder 100, welcher eine Grundplatte 105 aufweist. Gemäß dem hier dargestellten Ausführungsbeispiel ist die Grundplatte eine Leiterplatte 105 oder ein geeigneter Schaltungsträger zum Aufnehmen von elektronischen und optoelektronischen Bauelementen. Sämtliche an der Leiterplatte 105 angebrachten Bauelemente sind in nicht dargestellter Weise mittels Leiterbahnen oder elektrischen Drahtverbindungen in geeigneter Weise kontaktiert.

Der Rauchmelder 100 umfasst eine erste Reflektionslichtschranke 110 und eine zweite Reflektionslichtschranke 120. Die erste Reflektionslichtschranke 110 weist einen ersten Lichtsender 111 und unmittelbar daneben in einem gemeinsamen Gehäuse angeordnet einen ersten Lichtempfänger 112 auf. Die zweite Reflektionslichtschranke 120 weist einen zweiten Lichtsender 121 und unmittelbar daneben in einem gemeinsamen Gehäuse angeordnet einen zweiten Lichtempfänger 122 auf.

Der erste Lichtsender 111 sendet im Wesentlichen senkrecht zu der Ebene der Leiterplatte 105 ein erstes Beleuchtungslicht 111a aus. Das erste Beleuchtungslicht 111a wird in einem ersten Detektionsraum 115, in dem sich beispielsweise Rauch befindet, zumindest teilweise um annähernd 180° zurückgestreut. Das zurück gestreute Licht erreicht als erstes Messlicht 112a den ersten Lichtempfänger 112.

In entsprechender Weise sendet der zweite Lichtsender 121 im Wesentlichen senkrecht zu der Ebene der Leiterplatte 105 ein zweites Beleuchtungslicht 121a aus. Das zweite Beleuchtungslicht 121a wird in einem zweiten Detektionsraum 125, in dem sich beispielsweise Rauch befindet, zumindest teilweise um annähernd 180° zurückgestreut. Das zurück gestreute Licht erreicht als zweites Messlicht 122a den zweiten Lichtempfänger 122.

Der Rauchmelder 100 weist ferner eine Subtraktionseinheit 136 auf, welche aus den Ausgangssignalen der beiden Lichtempfänger 112 und 122 ein Differenzsignal bildet. Dieses Differenzsignal wird einer Datenverarbeitungseinrichtung 135 des Rauchmelders 100 zugeführt.

Ferner ist eine Steuereinrichtung 130 vorgesehen, welche mit den beiden Lichtsendern 111 und 121 gekoppelt ist. Dadurch können die beiden Lichtsender 111 und 121 unabhängig voneinander aktiviert bzw. eingeschaltet werden.

Sämtliche Komponenten 110, 120, 130, 135 und 136 des Rauchmelders 100 sind an der Leiterplatte 105 angebracht und in geeigneter Weise elektrisch kontaktiert. Dadurch kann der Rauchmelder 100 in einer sehr flachen Bauweise realisiert werden. Die Höhe des Rauchmelders 100 ist dabei lediglich durch die Dicke der Leiterplatte 105 und durch die Komponenten 110, 120, 130, 135 und 136 bestimmt.

Gemäß dem hier dargestellten Ausführungsbeispiel sind sämtliche Komponenten 110, 120, 130, 135 und 136 sog. Surface Mount Technology (SMD) Bauteile. Dadurch kann beispielsweise eine Gesamthöhe von lediglich 2,1 mm erreicht werden. Die Gesamthöhe ergibt sich dabei durch den Abstand zwischen der Oberseite der Leiterplatte 105 und der in Figur 1 mit dem Bezugszeichen 140 versehenen unteren Oberfläche des Rauchmelders.

Gemäß dem hier dargestellten Ausführungsbeispiel fallen die lichtaktiven Flächen der Lichtsender 111, 121 und der Lichtempfänger 112, 122 mit der Oberfläche 140 zusammen. Dies bedeutet, dass sich zwischen diesen lichtaktiven Flächen und dem jeweiligen Detektionsraum 115, 125 keine weiteren Teile des Rauchmelders 100 befinden. Dies gilt auch für Abdeckungen oder Gehäuseteile. Derartige Abdeckungen, welche bei bekannten Rauchmeldern häufig zur Zwecke einer Schmutzabweisung vorgesehen sind, sind jedoch bei vielen Anwendungen insbesondere im Heimbereich auch gar nicht erforderlich. Außerdem können auch Lichtschranken verwendet werden, welche für die lichtaktiven Flächen der Lichtsender 111, 121 und der Lichtempfänger 112, 122 bereits transparente Schutzschichten aufweisen, so dass dadurch zumindest ein gewisser Verschmutzungsschutz gegeben ist.

Der beschriebene Rauchmelder 100 mit zwei zueinander parallel ausgerichteten Reflexionslichtschranken hat den Vorteil, dass er keine optischen Elemente wie beispielsweise Linsen oder Spiegel aufweist. Dadurch kann der Rauchmelder auf besonders einfache Weise mit preiswerten Komponenten hergestellt werden. Beim Zusammenbau bzw. bei der Montage des Rauchmelders sind auch keine besonderen Montagetoleranzen zu beachten. Alle für den Rauchmelder erforderlichen Komponenten sind Massenware, welche preiswert zu beschaffen sind.

Es wird darauf hingewiesen, dass durch die parallelen Lichtstrahlen 111a, 112a, 121a, 122a prinzipiell die Gefahr besteht, dass weit entfernte feste Objekte als Rauch interpretiert werden könnten. Ein versehentlich in der Nähe des Rauchmelders 100 in den Detektionsraum gebrachtes gegenständliches Objekt kann anhand des sehr starken Rückstreusignals gut von einem Rauchsignal unterschieden werden. Weit entfernte Streuobjekte, die sich im Blickfeld des Rauchmelders befinden, liefern aufgrund ihrer meist diffusen Rückstreuung jedoch nur ein schwaches Signal und sind mit obigem Kriterium häufig nicht mehr zuverlässig von Rauch unterscheidbar.

Eine zuverlässige Unterscheidbarkeit zwischen Rauch und weit entfernten gegenständlichen Streuobjekten kann mit dem beschriebenen Rauchmelder 100 jedoch auf wirksame Weise dadurch erfolgen, dass beispielsweise während des Aussendens des Beleuchtungslichts 110a durch den aktivierten Lichtsender 111 der andere Lichtsender 121 ab geschalten bzw. deaktiviert wird. Gleichzeitig sind beide Lichtempfänger 112 und 122 aktiviert. Zeigen in diesem Fall beide Lichtempfänger 112 und 122 zumindest annähernd das gleiche Signal, dann handelt es sich um ein fernes Echo von einem Gegenstand, der sich außerhalb des Detektionsraumes in dem Blickfeld des Rauchmelders befindet. Dieses Echo kann beispielsweise von einer Bodenfläche der von dem Rauchmelder 100 überwachten Raumes und nicht von Rauchpartikeln stammen. Rauchpartikel würde sich nämlich insbesondere bei einer Deckenmontage des Rauchmelders 100 zumindest teilweise auch in der Nähe des Rauchmelders 100 befinden, so dass in diesem Fall die Signale der beiden Lichtempfänger 112 und 122 unterschiedlich stark wären.

Zur Detektion von Rauch kann auch einfach das Differenzsignal zwischen den beiden Lichtempfängern 112 und 122 ausgewertet werden. Dabei kann auch effektiv der Einfluss von Fremdlicht unterdrückt werden.

Figur 2 zeigt die bereits in Figur 1 dargestellte Subtraktionseinheit, welche nunmehr mit dem Bezugszeichen 236 versehen ist. Einem "Plus-Eingang" der Subtraktionseinheit 236 wird ein erstes Ausgangssignal 212b des ersten Lichtempfängers zugeführt, welcher in Figur 2 mit dem Bezugszeichen 212 versehen ist. Einem "Minus-Eingang" der Subtraktionseinheit 236 wird ein zweites Ausgangssignal 222b des zweiten Lichtempfängers zugeführt, welcher in Figur 2 mit dem Bezugszeichen 222 versehen ist. Aus den beiden Ausgangssignalen 212b und 222b wird ein Differenzsignal 236b gebildet, welches einer in Figur 2 nicht dargestellten Datenverarbeitungseinrichtung zugeführt wird. Das Differenzsignal 236b kann in der Datenverarbeitungseinrichtung wie oben beschrieben ausgewertet werden.

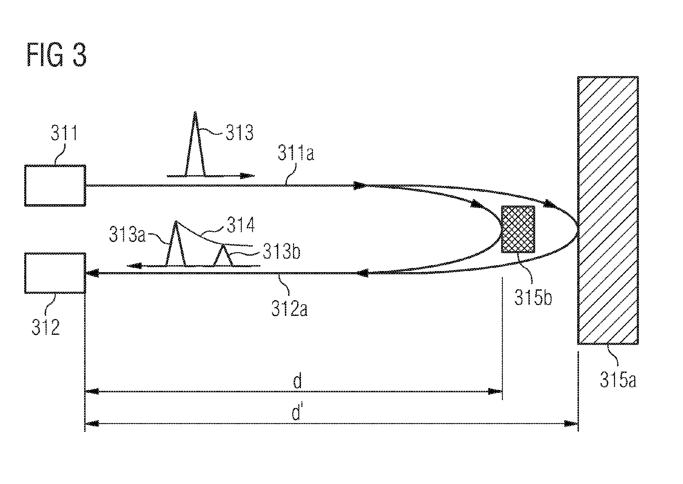

Figur 3 illustriert in einer schematischen Darstellung die zeitliche Verbreiterung oder Strukturierung eines Lichtpulses infolge der Streuung an verschiedenen räumlich verteilten Gegenständen 315a und 315b. Bei den Gegenständen 315a und 315b handelt es sich ausdrücklich nicht um Rauch. Aus dem Grad der zeitlichen Verbreiterung oder der zeitlichen Strukturierung können Rückschlüsse über räumliche Verteilung der gegenständlichen Streuobjekte 315a und 315b gewonnen werden.

Wie aus Figur 3 ersichtlich, sendet ein Lichtsender 311 ein Beleuchtungslicht 311a aus, welches zumindest einen kurzen Lichtpuls 313 aufweist. Dieser Lichtpuls 313 wird dann an den im Blickfeld des Melders befindlichen Gegenständen 315a und 315b um ungefähr 180 Grad zurückgestreut. Dabei tritt die Rückstreuung an allen möglichen Gegenständen innerhalb des Blickfelds des Melders 311, 312 auf. Aus Gründen der Übersichtlichkeit werden bei der Illustration in Figur 3 jedoch nur zwei Gegenstände berücksichtigt. Ein exemplarischer Gegenstand 315b befindet sich in einem Abstand d von dem Lichtsender 311, der andere exemplarische Gegenstand 315a befindet sich in einem Abstand d' von dem Lichtsender 311. Gemäß dem hier dargestellten Ausführungsbeispiel handelt es sich bei dem Gegenstand 315a um den Boden eines überwachten Raumes. Bei dem Gegenstand 315b kann es sich um einen beliebigen Gegenstand wie beispielsweise ein Möbelstück handeln, welches sich permanent oder zeitweise zwischen dem Boden 315a und dem Rauchmelder 311, 312 befindet.

Der Lichtpuls 313 trifft zunächst auf den zweiten Gegenstand 315b im Abstand d von dem Lichtsender. Dabei wird ein Teil der Lichtenergie zurückgestreut, so dass das Messlicht 312a, welches auf den Lichtempfänger 312 trifft, einen ersten Rückstreupuls 313a aufweist. Danach trifft der inzwischen etwas abgeschwächte Lichtpuls 313 auf den ersten Gegenstand bzw. den Boden 315a, welcher sich im Abstand d' von dem Lichtsender befindet. Auch an dem Boden 315a wird wieder ein Teil der Lichtenergie zurück gestreut, so dass das Messlicht 312a einen zweiten Rückstreupuls 313b aufweist.

Bei einer Berücksichtigung sämtlicher in Frage kommender Gegenstände ergibt sich somit eine Überlagerung einer Vielzahl von einzelnen Rückstreupulsen, wobei der resultierende Gesamtrückstreupuls im Vergleich zu dem Eingangslichtpuls 313 erheblich verbreitert ist. Aufgrund der Absorption durch sich evtl. im Blickfeld des Melders befindlichen Rauch kann dabei die Intensität der späteren Rückstreupulse im Vergleich zu den früher auf den Lichtempfänger 312 auftreffenden Rückstreupulsen reduziert sein. Daraus ergibt sich eine asymmetrische Form bzw. ein asymmetrischer zeitlicher Verlauf des Gesamtrückstreupulses, welcher in Figur 3 mit dem Bezugszeichen 314 versehen ist.

In diesem Zusammenhang wird darauf hingewiesen, dass sich evtl. im Blickfeld des Melders befindlicher Rauch, der sich in einem Abstand von typischerweise mehr als einige Zentimeter von dem Rauchmelder 311, 312 befindet, keinen nennenswerten Beitrag zu dem empfangenen optischen Rückstreusignal liefert.

Um den oben beschriebenen Effekt der Verbreiterung oder Strukturierung des Rückstreusignals zu erfassen, kann deshalb für eine intelligente Rauchdetektion nicht nur der Betrag bzw. die Stärke der Rückstreuung sondern auch der zeitliche Verlauf des entsprechenden gepulsten Rückstreusignals ausgewertet werden. Wie bereits oben angedeutet, kann dabei jeder Eingangslichtpuls 313 eine Mehrzahl von Rückstreuimpulsen 313a, 313b, ..., erzeugen, welche von den räumlich verteilten Gegenständen 315a, 315b herstammen. Je weiter ein Gegenstand entfernt ist, desto mehr wird der hinlaufende Lichtstrahl 311a durch Streuung und Absorption von ggf. in der Raumluft enthaltenen Rauchpartikel gedämpft. Das Gleiche passiert mit dem zurück gestreuten Messlicht 312a. Das Echo der weiter entfernten Gegenstände trifft aber auch später beim Lichtempfänger 312 ein. Anhand des zeitlichen Verlaufs des empfangenen Lichtimpulses kann somit die räumliche Verteilung bzw. Anordnung der in dem Blickfeld des Rauchmelders befindlichen Gegenstände bestimmt werden.

Es wird darauf hingewiesen, dass auch die Laufzeit des Lichtpulses vom Aussenden bis zum Empfang des zurück gestreuten Lichtpulses 314 gemessen und daraus die Distanz zwischen dem Lichtsender 311 bzw. dem Lichtempfänger 312 und den Gegenständen 315a und 315b berechnet werden kann.

Es wird ferner darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

**Patentansprüche**

1. Vorrichtung zum Detektieren von Rauch, die Vorrichtung aufweisend

• ein Grundelement (105) mit einer planen Montagefläche,
• einen ersten Lichtsender (111), welcher an der Montagefläche angebracht ist und welcher zum Aussenden eines ersten Beleuchtungslichts (111a) eingerichtet ist,
• einen ersten Lichtempfänger (112), welcher neben dem ersten Lichtsender (111) an der Montagefläche angebracht ist und welcher zum Empfangen eines ersten Messlichts (112a) eingerichtet ist, welches aus einer Rückstreuung des ersten Beleuchtungslichts (111a) an einem in einem ersten Detektionsraum (115) befindlichen Messobjekt resultiert,
• einen zweiten Lichtsender (121), welcher an der Montagefläche angebracht ist und welcher zum Aussenden eines zweiten Beleuchtungslichts (121a) eingerichtet ist,
• einen zweiten Lichtempfänger (122), welcher neben dem zweiten Lichtsender (121) an der Montagefläche angebracht ist und welcher zum Empfangen eines zweiten Messlichts (122a) eingerichtet ist, welches aus einer Rückstreuung des zweiten Beleuchtungslichts (121a) an einem in einem zweiten Detektionsraum (125) befindlichen Messobjekt resultiert, und
• eine Datenverarbeitungseinrichtung (135), welche mit dem ersten Lichtempfänger (112) und dem zweiten Lichtempfänger (122) gekoppelt ist und welche zum gemeinsamen Auswerten eines ersten Ausgangssignals (212b) des ersten Lichtempfängers (112, 212) und eines zweiten Ausgangssignals (222b) eines zweiten Lichtempfängers (122, 222) eingerichtet ist.

2. Vorrichtung nach Anspruch 1, bei der
der erste Lichtsender (111) und der erste Lichtempfänger (112) durch eine erste Reflektionslichtschranke (110)
und/oder
der zweite Lichtsender (121) und der zweite Lichtempfänger (122) durch eine zweite Reflektionslichtschranke (120) realisiert sind.

3. Vorrichtung nach einem der Ansprüche 1 bis 2, bei der
die Richtung des ersten Beleuchtungslichts (111a) in Bezug zu einer Normalen der Montagefläche in Richtung des ersten Lichtempfängers (112) geneigt ist und/oder
die Richtung des zweiten Beleuchtungslichts (121a) in Bezug zu der Normalen der Montagefläche in Richtung des zweiten Lichtempfängers (122) geneigt.

4. Vorrichtung nach einem der Ansprüche 1 bis 3, bei der
die Richtung des ersten Beleuchtungslichts (11a) und die Richtung des zweiten Beleuchtungslichts (121a) parallel zueinander verlaufen.

5. Vorrichtung nach einem der Ansprüche 1 bis 4, bei der
der erste Lichtsender (111) und der zweite Lichtsender (121) sowie der erste Lichtempfänger (112) und der zweite Lichtempfänger (122) jeweils eine äußere Begrenzung der Vorrichtung zum Detektieren von Rauch darstellen.

6. Vorrichtung nach einem der Ansprüche 1 bis 5, zusätzlich aufweisend
eine Subtraktionseinheit (1136, 236), welche eingangsseitig mit dem ersten Lichtempfänger (112, 212) und dem zweiten Lichtempfänger (122, 222) und welche ausgangsseitig mit der Datenverarbeitungseinrichtung (135) gekoppelt ist.

7. Vorrichtung nach einem der Ansprüche 1 bis 6, bei der
der erste Lichtempfänger (112) eingerichtet ist zum Erfassen eines zeitlichen Verlaufs des ersten Messlichts (111a).

8. Vorrichtung nach Anspruch 7, bei der
der erste Lichtsender (111, 311) eingerichtet ist zum Aussenden eines gepulsten ersten Beleuchtungslichts (311a, 313).

9. Vorrichtung nach einem der Ansprüche 1 bis 8, zusätzlich aufweisend

 • eine Steuereinrichtung (130), welche mit dem ersten Lichtsender (111) und dem zweiten Lichtsender (121) gekoppelt ist und welche derart eingerichtet ist, dass der erste Lichtsender (111) unabhängig von dem zweiten Lichtsender (121) aktivierbar ist.

10. Verfahren zum Detektieren von Rauch unter Verwendung einer Vorrichtung nach einem der Ansprüche 1 bis 9, das Verfahren aufweisend

 • Aussenden zumindest des ersten Beleuchtungslichts (111a) durch den ersten Lichtsender (111), und
 • Empfangen zumindest des ersten Messlichts (112a) mittels des ersten Lichtempfängers (112), welches aus einer Rückstreuung des ersten Beleuchtungslichts (111a) an einem in einem ersten Detektionsraum (115) befindlichen Messobjekt resultiert.

11. Verfahren nach Anspruch 10, zusätzlich aufweisend

 • Empfangen von Licht mittels des zweiten Lichtempfängers (122).

12. Verfahren nach einem der Ansprüche 10 bis 11, zusätzlich aufweisend

 • Bilden eines Differenzsignals (236b) zwischen dem ersten Ausgangssignal (212b) und dem zweiten Ausgangssignal (222b).

13. Verfahren nach einem der Ansprüche 10 bis 12, wobei
das erste Beleuchtungslicht (111a, 311a) Lichtpulse (313) aufweist.

14. Verfahren nach Anspruch 13, zusätzlich aufweisend

 • Messen der Länge der als erstes Messlicht (112a, 312a) zurück gestreuten Lichtpulse (314).

15. Verfahren nach einem der Ansprüche 13 bis 14, zusätzlich aufweisend

 • Messen der Zeitdifferenz zwischen dem Aussenden eines Lichtpulses (313) des ersten Beleuchtungslichts (111a, 311a) und dem Empfangen des entsprechenden Lichtpulses (314) des zurück gestreuten ersten Messlichts (112a, 312a).

FIG 1

FIG 2

FIG 3

**Europäisches**
**Patentamt**

# EUROPÄISCHER RECHERCHENBERICHT

Nummer der Anmeldung

EP 08 10 1743

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>Y | EP 1 783 713 A (SIEMENS SCHWEIZ AG [CH] SIEMENS AG [DE]) 9. Mai 2007 (2007-05-09)<br>* Zusammenfassung *<br><br>* Absätze [0002], [0005] - [0008]; Ansprüche 1,7-9; Abbildung 1 *<br>----- | 1,3,4,6, 10,11<br>2,7-9, 12,13,15 | INV.<br>G08B17/103<br>G08B29/04 |
| Y | EP 1 349 127 A (SIEMENS BUILDING TECH AG [CH]) 1. Oktober 2003 (2003-10-01)<br>* Zusammenfassung *<br>* Absätze [0006] - [0008], [0016] - [0030]; Abbildungen 1-4 *<br>----- | 9,12 | |
| Y | EP 0 472 039 A (NOHMI BOSAI LTD [JP]) 26. Februar 1992 (1992-02-26)<br>* Zusammenfassung *<br>* Spalten 3-6,12; Abbildungen 1-10 *<br>----- | 2,7,8, 13,15 | |
| | | | **RECHERCHIERTE SACHGEBIETE (IPC)**<br><br>G08B |

Der vorliegende Recherchenbericht wurde für alle Patentansprüche erstellt

| Recherchenort | Abschlußdatum der Recherche | Prüfer |
|---|---|---|
| München | 1. Juli 2008 | Wright, Jonathan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 08 10 1743

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-07-2008

| Im Recherchenbericht angeführtes Patentdokument | | Datum der Veröffentlichung | Mitglied(er) der Patentfamilie | | Datum der Veröffentlichung |
|---|---|---|---|---|---|
| EP 1783713 | A | 09-05-2007 | AT | 397261 T | 15-06-2008 |
| | | | WO | 2007051819 A1 | 10-05-2007 |
| EP 1349127 | A | 01-10-2003 | AU | 2003200391 A1 | 23-10-2003 |
| | | | CN | 1448896 A | 15-10-2003 |
| | | | CZ | 20030886 A3 | 12-11-2003 |
| | | | HU | 0300792 A2 | 29-12-2003 |
| | | | NO | 20030680 A | 29-09-2003 |
| | | | PL | 359358 A1 | 06-10-2003 |
| EP 0472039 | A | 26-02-1992 | DE | 69118277 D1 | 02-05-1996 |
| | | | DE | 69118277 T2 | 02-10-1996 |
| | | | JP | 2935549 B2 | 16-08-1999 |
| | | | JP | 4102997 A | 03-04-1992 |
| | | | US | 5225810 A | 06-07-1993 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1039426 A2
- DE 102004001699 A1
- WO 2005051053 A
- EP 0472039 A2